# EUROPEAN PATENT APPLICATION

(11) **EP 4 451 522 A1**
(43) Date of publication of application: **23.10.2024**
(21) Application number: 23275061.2
(22) Date of filing: 17.04.2023
(51) Int. Cl.: H02K 3/18, H02K 3/34, H02K 1/14

(54) **STATOR COIL INSULATION**

(71) Applicant: Hamilton Sundstrand Corporation, Charlotte, NC 28217 (US)
(72) Inventor: PARMINDER, Sangha, Solihull, B93 8SY (GB); PAGE, Andrew Edward, Tring, HP23 4QD (GB)
(74) Representative: Dehns

(57) **Abstract**

A stator coil comprising: a conductor wound into a plurality of turns having substantially straight sides and opposing curved ends; and insulating material provided between the conductor turns and wound into the turns with the conductor, and a method of forming a stator coil, the method comprising: winding a conductor in a plurality of turns defined by opposing substantially straight sides an opposing curved ends, and winding an insulating material located below or above the conductor together with the conductor.

## Description

### TECHNICAL FIELD

The present disclosure relates to insulated stator coils and methods of forming such coils, particularly coils made of multiple strands.

### BACKGROUND

Electric motors are formed of a stationary stator which generates an electrical field to cause rotation of a rotor relative to the stator. The field is generated by means of multiple stator coils or windings arranged around the stator body or core. High power density motors are required in many industrial fields e.g. in large machinery, vehicle or aircraft and such motors require large numbers of windings comprising conductors wound in many turns. In aircraft, for example, such high power density motors are used for electric propulsion, fuel pumping, actuation and other applications.

As the stator in such motors can be very large, the stator is often formed in a modular manner in which several stator parts or modules are formed and then assembled to form the stator body. This modular approach also allows scalable manufacture of stators for different applications. In smaller motors, the stator body can be machined as a single part.

Typically, the stator body is formed with circumferential teeth around which the conductor coils or windings are formed or mounted. The coils may be pre-wound and then assembled onto the stator teeth. In modular stator designs, it is also possible for each module part to comprises a stator segment having one or more teeth onto which the coils are pre- assembled and then the modular parts are assembled to form the stator.

Either way, the stator coils are formed by winding a conductive material about several turns e.g. directly onto a tooth or onto a mandrel or the like. Where the conductive material is a single electrically conductive wire e.g. a copper wire, the wire would usually be sleeved in electrically insulating material and the insulated wire is then wound to form the coil. The wound coil may then be further sheathed in insulative material or tape to provide additional strength and electrical insulation security in case the insulating sleeve on the wire becomes damaged. This typically provides a safe and reliable coil.

More recently, rather than a single conductive wire, coils have been formed of a conductor of multiple small strands formed as a bundle or twisted together to form a twisted multi-strand bundle. Litz wires are also commonly used as the coil conductor. Litz wires are formed of a large number of thin strands of conductor which are each individually insulated and then twisted or woven together in a particular pattern so that each of the strands is on the outside of the bundle for the same length, so that the current along the conductor is equally shared between the strands. Where multiple strands are used to form the conductor, each strand is typically coated with or sleeved in an insulating material and the insulated strands are then formed into the bundled conductor. The insulation of the individual strands helps minimise eddy currents and proximity effects. The resulting conductor bundle may then also be provided with further insulation, especially when used in high voltage systems or where high transient voltages may be expected due to transmission line effects. The bundle conductor is then wound to form the coil which may, again, be insulated or taped to hold the turns together in the coil shape.

A problem that has been identified with coiled insulated conductors, particularly with multi-strand conductors is that the multi-strand bundle tends to change shape when the conductor is bent around a turn, due to inherent forces arising from the bundle construction and from the different strands in the bundle and the way they are combined. This becomes more prominent when such conductors are bent around a turn of small radius. These changes in shape, which may also create sharp edges or protrusions rather than a smooth curve, can damage the insulating material around the strands and/or the conductor particularly in the end or turn regions of the coil. Damage to individual sections of insulation can be difficult to repair especially in coils of multiple turns. Even if a tear in the insulation can be repaired, the repair can add to the bulk of the conductor at that location providing an uneven coil shape or a coil that is too thick to fit in the stator slot.

There is, therefore, a need for an improved way to provide insulated coils using multi-strand conductors.

### SUMMARY

According to this disclosure, there is provided a stator coil comprising: a conductor wound into a plurality of turns having substantially straight sides and opposing curved ends; and insulating material provided between the conductor turns and wound into the turns with the conductor.

Also provided is a method of forming a stator coil, the method comprising: winding a conductor in a plurality of turns defined by opposing substantially straight sides an opposing curved ends, and winding an insulating material located below or above the conductor together with the conductor.

### BRIEF DESCRIPTION

Examples according to the disclosure will now be described with reference to the drawings. It should be noted that variations are possible within the scope of the claims.
Figure 1A shows an example of a stator of an electric motor for the purposes of explanation.
Figure 1B shows a portion of the stator of Fig. 1A in close-up view.
Figure 2 shows an example of an insulated conductor wound into a coil.
Figure 3A shows an example of winding a coil according to this disclosure.
Figure 3B is a portion of a coil wound as shown in Fig. 3A.
Figure 4A shows another example of winding a coil according to this disclosure.
Figure 4B is a portion of a coil wound as shown in Fig. 4A.

### DETAILED DESCRIPTION

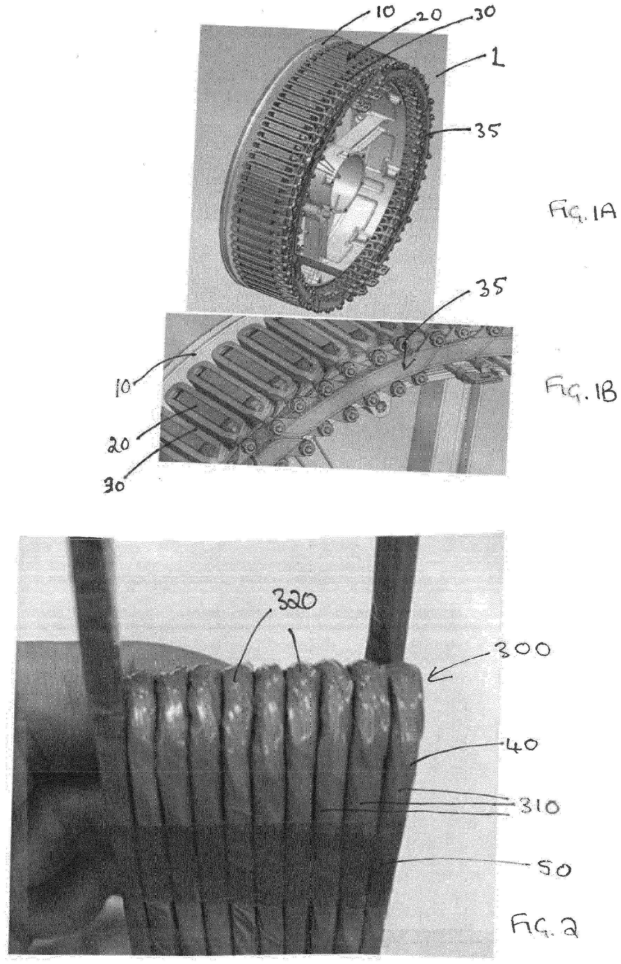

Figures 1A and 1B show a typical large motor stator 1 formed of a stator body 10 around which are provided a plurality of stator teeth 20 onto which stator coils 30 are mounted. The individual coils can be connected to form appropriate phase windings using busbar 35 or other coil connector arrangements. The design and operation of the stator and also of the motor of which the stator forms a part will not be described further as this is well-known and is not the subject of this disclosure. Such stators can be formed in a modular manner by pre-forming segments having several teeth and coils, the segments being fitted together to form the overall stator. In other examples, each segment may be just a single tooth and coil. Smaller stators can be formed as a single part and the coils can be fitted onto the teeth. Again, the present disclosure is not limited to any particular type of stator.

The focus of the present disclosure is on the forming of the stator coils.

Figure 2 shows an example of a stator coil wound and insulated in a known manner. This is an example of a pre-formed coil that can be fitted to a stator tooth of a stator body, or pre-mounted to a tooth on a segment for assembling into a stator. In other examples, the coil may be formed in situ by winding the insulated conductors around the teeth of the assembled stator body.

The conductor (not shown per se) may be a single conductive wire or a bundle of strands forming a multi-strand conductor or Litz wire and is selected to an appropriate size and length for the stator in question. The conductor is wrapped or coated in insulating material 40. If the conductor is made of multiple strands, each individual strand may be first coated or wrapped with insulator and then formed into a bundle, the bundle then being wrapped in a further coating 40 of insulation. The insulated conductor is then wound into an appropriately sized coil 300, the length, height and number of turns 310 selected according to the stator and its application. To keep the turns together in the coil, tape 50 may be provided around the turns.

As mentioned above, particularly where the conductor forming the coil is a multi-strand conductor, the shape of the conductor may change as it is bend around the coil ends 320 which can cause damage to the insulation 40 which was formed over the conductor before it was wound or bent. Damage can be to the insulation around the whole bundle of strands and/or, where present, the insulation around the individual strands (not shown in Fig. 2) forming the conductor. Further, the fact that insulation is provided around the conductor and possibly also around the individual strands forming the conductor, makes the conductor quite stiff, requiring additional force to wind it to form the coil.

According to the present disclosure, in order to address these problems, a stator coil is formed using a conductor that is not pre-coated or sheathed with insulation material and then wound into the coil. Rather, the un-insulated conductor is wound into the coil which requires less force to wind the conductor and also overcomes the problem of the distortion of the conductor/its multiple strands damaging the insulating sleeve or coating that was formed on it when straight. It is understood that if the conductor consists of multiple strands or Litz wire, then each strand within the conductor will have insulation coating to manage high frequency losses within the conductor (including proximity and circulating currents). Instead, insulation of the conductor is provided by providing a separate layer of insulating material between the turns during the coil winding process.

The insulation may be in the form of a continuous flat sheet that is fed between and wound with the turns of the conductor. Alternatively, the insulation may have a trough shape or U-shape such that the conductor sits in it and the insulator extends some or all of the way up the sides of the conductor as well as forming a layer between turns.

Typically, the conductor is wound into a coil by a winding tool machine or assembly (which will not be described further here as it is well-known). When winding coils according to this disclosure, the insulating material can be fed into the winding machine together with the conductor so that both are wound simultaneously and together.

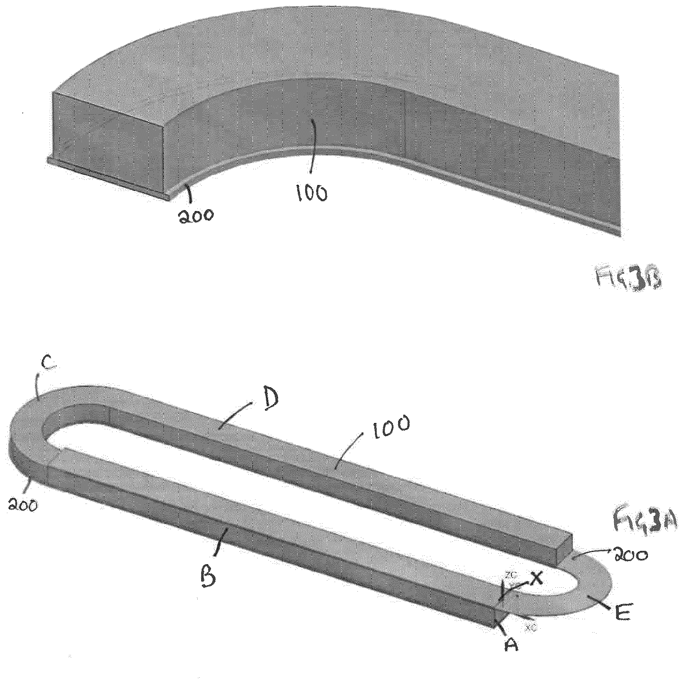

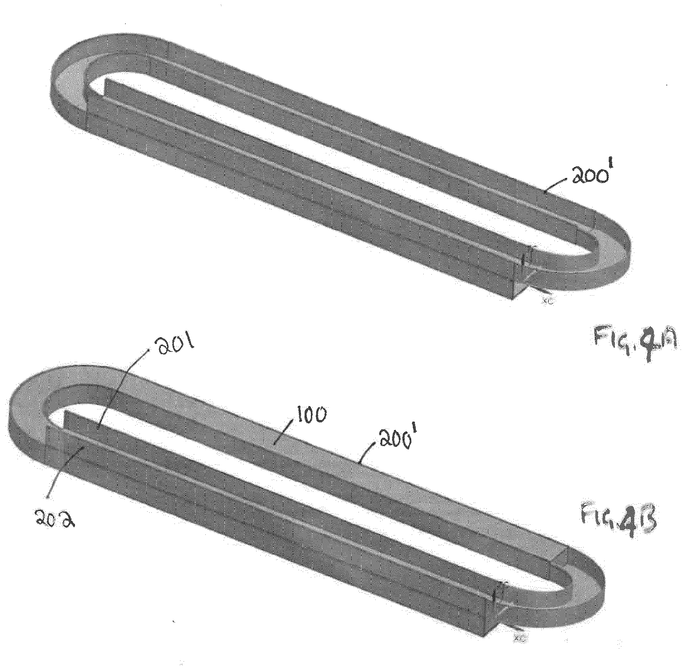

An example of the winding according to the disclosure can be seen in Figs. 3A and 3B. The conductor 100 is shown for simplicity is a block of conductive material. Whilst the conductor may be a single conductive wire, it may also be a bundle of multiple conductive strands forming the conductor as described above. The individual strands are not shown in Figs. 3A, 3B, 4A and 4B, for reasons of simplicity, but the teaching of this disclosure equally applies to multi-strand conductors 100. In fact, the advantages of this disclosure apply more to multi-strand conductors than to single wire conductors. In this description, the term 'conductor' includes a multi-strand conductor as well as a single wire conductor unless specifically stated otherwise.

In the example of Figs. 3A and 3B, the insulating material is a flat layer or strip of insulating material 200 positioned below the conductor in the winding process. For description only, the winding will be described starting from a first end A where the conductor extends in a substantially straight line to form a first side B of the coil and the insulating material 200 extends below and aligned with the conductor (seen more clearly in Fig. 3B). At the end of the first side B, the conductor and, at the same time, the underlying insulating material, is bent to form a coil end C after which the conductor and the insulating material extend again straight to form the second side D of the coil. At the end of the second side D, the conductor and the insulator are bent to form the second end E of the coil. In Fig. 3A, at this bend, only the insulator 200 is shown for explanatory purposes. In actual fact, the conductor would also continue along the same path on top of the insulator. The winding of the insulator and the conductor then continues on top of the first turn, to form a second turn of the coil, whereby the insulating material will be sandwiched between two turns of conductor. Again, for the second turn, Fig. 3A only shows the insulating material 200 extending along side B in a second turn. In reality, the conductor 100 would also continue along the same path. The winding of the insulating material and the conductor continues until the desired number of turns has been achieved.

If the insulating material is merely bent around the ends C, E, some overlap of the material may occur in the bend. Whilst this may be acceptable, especially if the insulating material is very thin, the additional bulk of the overlap may be undesirable. In that case, to be able to form smooth turns at the bends with the insulating material, and avoid scrunching or overlap, a cut or splice X may be formed in the insulating material at the bend locations. In a preferred example, the insulating material is spliced or cut at the start and end of each bend - i.e. two locations, or more locations around the bend, of a turn. This would be performed at each bend or every turn to keep the material flat. The insulating material could be provided as a continuous feed from e.g. a roll of tape and then cut once the coil is complete. Alternatively, the length of tape could be pre-cut and, if desired, pre-spliced at appropriate positions along the length to allow for a more automated coil forming process.

Although Figs. 3A and 3B show the insulating material positioned below the conductor, it may also be positioned above the conductor.

After the coil has been formed, tape or other insulation could be applied to cover the coil sides and the coil in/out leads.

In an alternative example, described with reference to Figs. 4A and 4B, rather than using a flat tape or layer of insulating material 200, the insulation 200' may be provided as a trough or U-shaped length of material which provides insulation across the top/bottom of the conductor as in the example shown in Figs. 3A and 3B but also forms sides 201, 202 to provide insulation at the sides of the conductor/the coil as well as between the turns. The height of the sides 201, 202 may be the same as the depth of the conductor 100 or less. In addition to providing more insulation of the coil, the U-shaped insulation will also help to better preserve the shape of the conductor, particularly at the bends. The sides 201, 202 may be close to the conductor while the coil is being wound or, alternatively, they may flare out during the winding and then be pressed in to the conductor sides after the coil has been wound. If the insulation is U-shaped, it may then only be necessary to provide additional insulation layers over the top/bottom of the finished coil after winding.

The stator coil winding according to this disclosure simplifies the coil winding process and provides a simpler, less bulky coil with less risk of damage to the insulation. Further, with suitable choice of insulation thickness, shape and type, it may also be possible to do away with the slot liners and end cheeks that are commonly used in stators, thus simplifying the overall stator design.

## Claims

1. A stator coil comprising:
a conductor (100) wound into a plurality of turns having substantially straight sides and opposing curved ends; and
insulating material (200, 200') provided between the conductor turns and wound into the turns with the conductor.

2. The stator coil of claim 1, wherein the conductor comprises a plurality of strands of conductive material.

3. The stator coil of claim 2, wherein the conductor is a bundle of the plurality of strands.

4. The stator coil of claim 3, wherein the plurality of strands are twisted together to form the bundle.

5. The stator coil of any preceding claim, wherein the conductor is a Litz wire.

6. The stator coil of any preceding claim wherein the insulating material is in the form of a flat tape.

7. The stator coil of claim 6, wherein the flat tape is provided below the conductor during winding.

8. The stator coil of claim 6, wherein the flat tape is provided below the conductor during winding.

9. The stator coil of any of claims 1 to 5, wherein the insulating material is a U-shaped strip sized to receive the conductor and extend from below the conductor and up the sides of the conductor.

10. The stator coil of any preceding coil, wherein the insulating material is spliced at locations corresponding to the curved ends.

11. The stator coil of any preceding claim, further comprising further insulating material provided around the wound coil.

12. A method of forming a stator coil, the method comprising:
winding a conductor in a plurality of turns defined by opposing substantially straight sides and opposing curved ends, and
winding an insulating material located below or above the conductor together with the conductor.

13. The method of claim 12, further comprising forming cuts in the insulating material at locations corresponding to the curved ends.

14. The method of claim 12 or 13, wherein the insulating material forms side flanges extending beyond the conductor width and the method further comprising pressing the side flanges against the sides of the wound coil.

15. The method of any of claims 12 to 14, further comprising providing additional insulating material over the completed coil.
